# EUROPEAN PATENT SPECIFICATION

(11) **EP 1 498 829 B1**
(45) Date of publication and mention of the grant of the patent: **31.08.2011**
(21) Application number: 03016301.8
(22) Date of filing: 18.07.2003
(51) Int. Cl.: G06F 17/30

(54) **Method and computer system for aggregating information**
Verfahren und Computersystem für zusammengestellte Informationen
Procédé et système informatique pour l'agrégation d'informations

(43) Date of publication of application: 19.01.2005
(73) Proprietor: SAP AG, 69190 Walldorf (DE)
(72) Inventor: von Bergen, Axel, 69168 Wiesloch (DE); Sauermann, Volker, 69221 Dossenheim (DE); Schwarz, Arne, 69117 Heidelberg (DE)
(74) Representative: Schiuma, Daniele Wolfgang

(56) References cited:
- WO-A-02/061612
- US-A- 5 295 261
- US-A1- 2002 077 997
- US-B1- 6 321 241
- US-B1- 6 487 546

## Description

### Field of the Invention

The present invention generally relates to electronic data processing, and more particularly, relates to methods, computer program products and systems for data storage.

### Background of the Invention

Data storage systems sometimes are used within organizations to provide aggregate information to the users. For example, a typical question for sales people, managers, directors, etc. in an enterprise is about the revenue being generated by the various sales regions of the enterprise. Another question can be about the revenue generated by sales person. In general, to provide aggregate information on the level of subsets of records, often numerical evaluations of the type "distribution of X over Y" have to performed using large amounts of data stored in a large number of records. For example, the data may be stored in tables of a relational database management system (RDBMS) or in files of a file system. Technically speaking, in the above examples the requested information would be obtained by selecting the records (subset) of a requested sales region or sales person and calculating the sum of all revenue values stored in a corresponding table column with respect to the records of the corresponding subset. This procedure is repeated for all sales regions or sales persons, or for any other subset of records that provides the details for the requested aggregate information. Often, such a type of query cannot be executed in a dialog transaction since the response time would be too long. Instead, in many cases, a batch job is scheduled to prepare the results in the form of static data to be used by a later query in a dialog transaction. Static data refers to non changing data. If data is changing, then evaluations, as described in the examples above, are usually calculated based on a snapshot of the data at a specific point in time. However, it is useful for users of a data storage system to be able to vary input parameters such as regions, etc., and to get the response including the aggregate numerical information (e.g., revenues) instantaneously, even for subsets that include millions of matching records.

The international patent application "Data Structure for Information Systems" PCT/EP02/01026 describes how to establish a data structure used by a data storage system to enable rapid query processing. The data structure is preferably stored in the main memory of the data storage system and can be used for selecting and counting data with respect to specific search criteria based on attribute values. Subsets of records fulfilling specific conditions of a query can be identified in a very short time.

The United States patent "Cross Tab Analysis and Reporting Method" US 6 321 241 B1 describes how data structures with aggregate values are used for structured reports. The data structures reflect the structures of the corresponding structured reports in such a way that first level structures of the data structure correspond to first labels and second levels structures correspond to second labels. Data Structures with first and second level structures have aggregate values but do not specifically support rapid queries with respect to search criteria based on attribute values of an attribute. There is also described the use of cross tree structures with reduced numbers of levels but again there is no specific support of queries of

### the mentioned type.

### Summary of the Invention

A general aspect of the invention is to provide a method, computer system and computer program product for aggregation of numerical information relating to data records in a data storage system that performs better than prior art database systems.

This is achieved by embodiments of the invention according to the claims 1, 3, 5, and 6.

The data storage system uses a data structure for storing a plurality of InfoCourses, where each InfoCourse represents a data record and includes a plurality of InfoCourse nodes organized in a tree structure. The data structure further stores an InfoType tree, where each InfoType node corresponds to an InfoCourse node and represents an attribute value of the corresponding InfoCourse. Each InfoType node is associated with a numerical attribute related to the corresponding InfoCourse. Each InfoType node has a corresponding calculation object for adding the value of the associated numerical attribute to the sum of the calculation objects of its child nodes.

By using such calculation objects, aggregate numerical information with respect to the numerical attribute becomes readily available at various levels of the InfoType tree without a need for further calculations by the data storage system.

Another aspect of the invention is to provide a method, computer system and computer program product for fast aggregation of numerical information relating to subsets of InfoCourses, where the subsets are determined in compliance with a Boolean expression.

This is achieved by embodiments of the invention according to the claims 1, 3 5, and 6.

These embodiments perform simple calculations, such as additions or subtractions, to obtain the requested information instead of counting through all of the InfoCourses of the subsets.

The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

FIG. 1 is a simplified block diagram of an example of a data storage computer system that can be operated according to invention;
FIG. 2 is a diagram of a static hierarchical data structure used in one embodiment of the data storage system;
FIG. 3 schematically shows the initial state of an anchor as used in the data structure;
FIG. 4 illustrates the use of the anchor for the implementation of an InfoType;
FIG. 5 illustrates adding an InfoCell to the data structure;
FIG. 6 illustrates the structure that is obtained when multiple InfoTypes are put into the data structure;
FIG. 7 shows an InfoCourse that contains data;
FIG. 8 illustrates multiple InfoCourse paths in the data structure;
FIG. 9 shows two InfoType trees where one InfoType tree uses calculation objects;
FIG. 10 illustrates how the calculation objects calculate values based on values in the further InfoType tree; and
FIG. 11 illustrates subsets of one InfoType tree.

### Detailed Description of the Invention

In the following, a database management software of a data (storage) system is explained that can be used together with an embodiment of the invention. The data storage system can store data from a relational database. However, the data structure used by the data storage system is not limited to the constraints of a known relational database architecture. Examples of data structure elements of the data storage system are InfoSystem, InfoArea, InfoCluster, InfoType InfoCourse, and InfoCell. In a relational database the structure elements correspond to elements, such as Management System, Database, Table, Attribute, Data Record, and Field, respectively. For convenience of explanation the correspondence of terms is repeated in the following table 1.

**table 1: correspondence of terms**

| **data storage system** | **relational database system** |
|---|---|
| InfoSystem | Management System |
| InfoArea | Database |
| InfoCluster | Table |
| InfoType | Attribute |
| InfoCourse | Data record |
| InfoCell | Field |

Further definitions of terms, as used hereinafter:

Boolean operators:
operators used in Boolean statements, e.g., AND, OR.

Boolean expression:
statement including multiple conditions that are combined using Boolean operators.

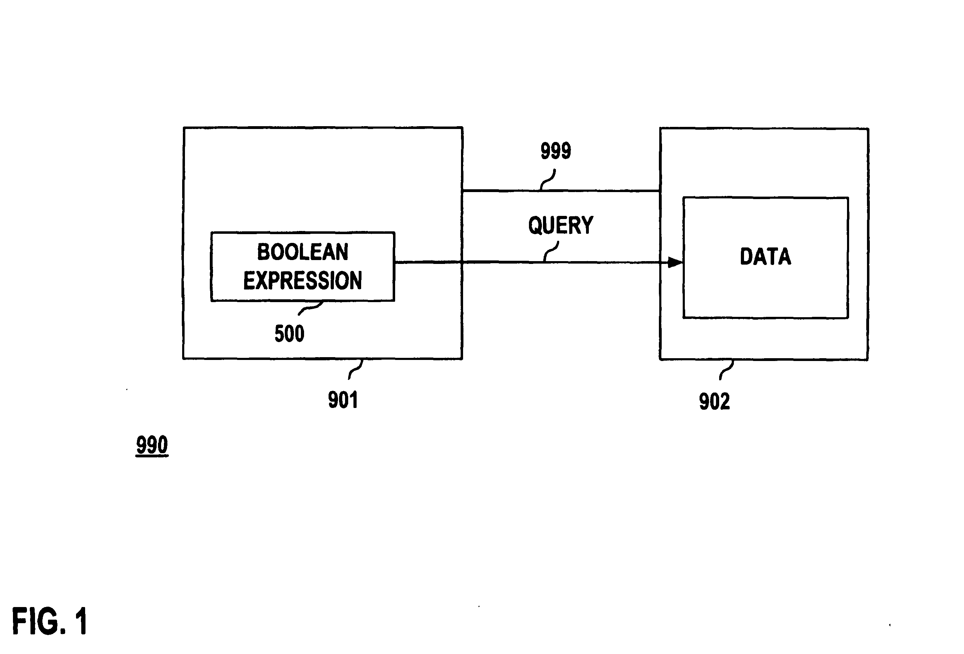

FIG. 1 is a simplified block diagram of the computer system 990 that can be used with an embodiment of the invention. The computer system 990 includes multiple computing devices (e.g., first computing device 901 and second computing device 902) that communicate over a network 999, such as a local area network (LAN), wide area network (WAN), the Internet, or a wireless network.

For example, the second computing device 902 may be a backend system, such as a database system, a file system or an application system, that stores data. The data can also be stored anywhere inside or outside of the computer system 990.

The first computing device 901 may be used to compose Boolean expressions 500 to be used in a QUERY for retrieving selected data from the second computing device 902. For example, the first computing device 901 may be a front end computer that provides a graphical user interface (GUI) to a user.

There can be various ways in which the data storage system 902 receives the QUERY, dependent on the interfaces offered for the data storage system 902. For example, in case of using an SAP R/3 based system, the SAP Remote Function Call (RFC) functionality provided by the ABAP kernel can be used. An application programming interface (API) can be implemented as a collection of ABAP Function Modules. The API uses the RFC functionality to communicate remotely with the data storage system. An SAP R/3 based application uses the API for receiving parameters that are passed to the data storage system 902. The corresponding results are then returned as ABAP parameters. A selection query is filled into an internal table in ABAP and can be rapidly processed by the data storage system since the query is already pre-structured.

In general, any interface or meta format can be used to post a Query to the data storage system. A pre-structured query is useful but not necessary. The query may also be coded in XML or simply be passed to the data storage system as a string that has to be parsed within the data storage system.

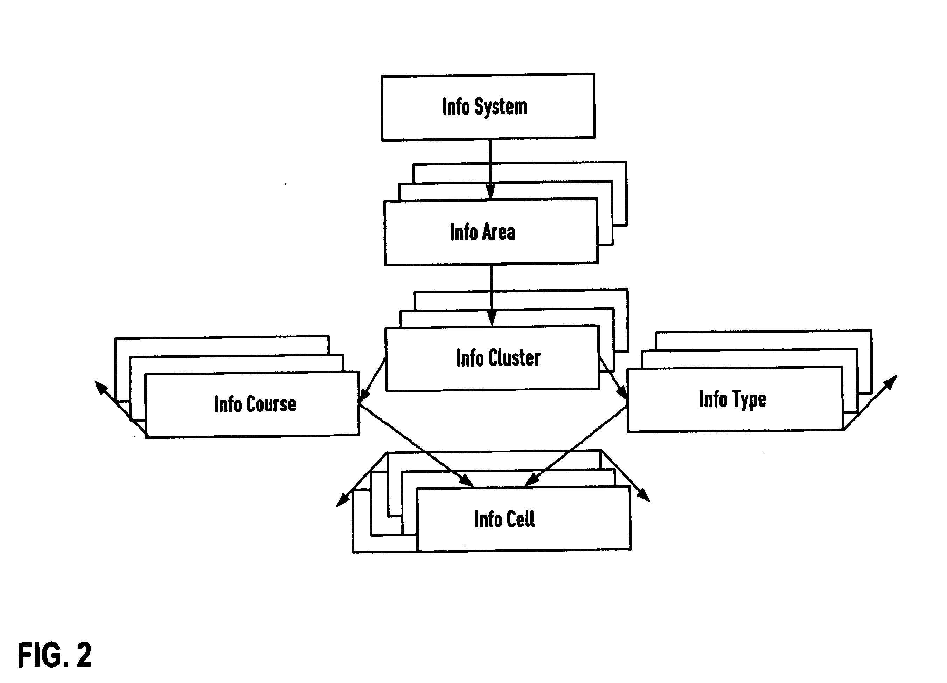

FIGs. 2 to 8 explain details of one embodiment of the data storage system 902. For example, as described in the patent application PCT/EP02/01026, the data storage system 902 can be configured as a fast cache with all data structures residing in its main memory.
FIG. 2 is a diagram of a static hierarchy structure used in one embodiment of the data storage system 902. Each box in the structure corresponds to an instance of the data type that is used as a label for the box. Multiple overlapping boxes illustrate multiple instances of the same data type. A single arrow between instances of different data types stands for an arbitrary number of arrows between multiple instances at each corresponding level of the structure. In the following description, the data type labels are used to refer to corresponding instances of the data type. The highest level in the structure is the InfoSystem level. Down from the top level one or more InfoAreas are connected to the InfoSystem. The InfoSystem provides algorithms necessary to operate the data storage system in run time. The InfoSystem is connected to any number of InfoAreas through a linking element, which will be described hereinafter as an anchor. These InfoAreas can for example refer to logical units of the InfoSystem.

Each InfoArea is connected via a linking element (again an anchor as described hereinafter) to an InfoCluster. In turn, each InfoCluster is connected to at least one InfoCourse and at least one InfoType, through respective linking elements, such as anchors. The InfoType can be seen as an attribute of a table; an InfoCourse starts always in an InfoCluster. If an InfoCourse stays within an InfoCluster with its addressed InfoCell elements corresponding to fields of a table, then the InfoCourse is similar to a record of a table, such as a relational database table.

Under the InfoCourse and the InfoType the InfoCell is found; this is the element on the lowest level in the hierarchical structure. On the creation of an InfoType an anchor is created that is an InfoCell also. This anchor has the function to represent the structure of following InfoCell elements.

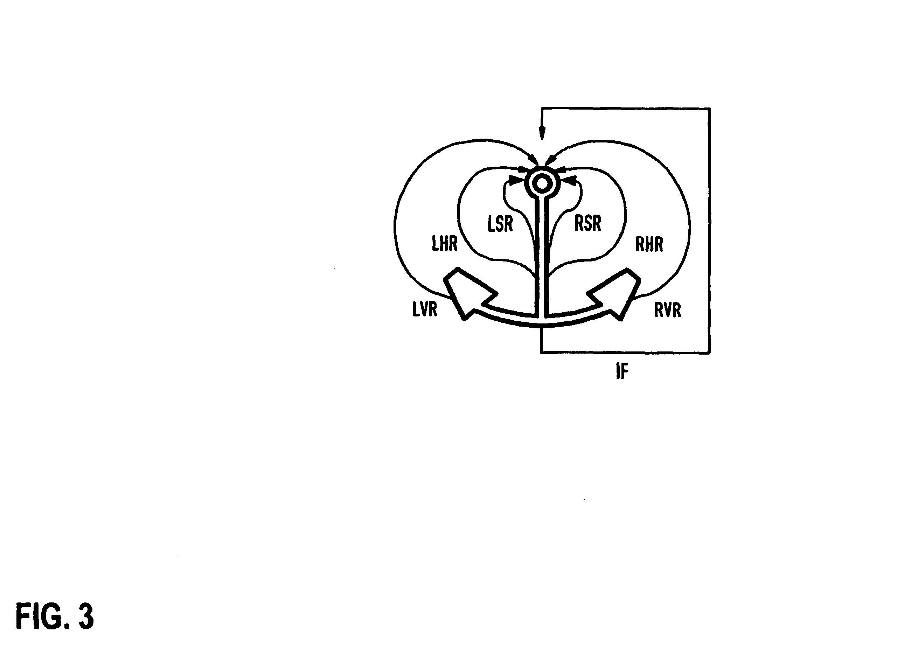

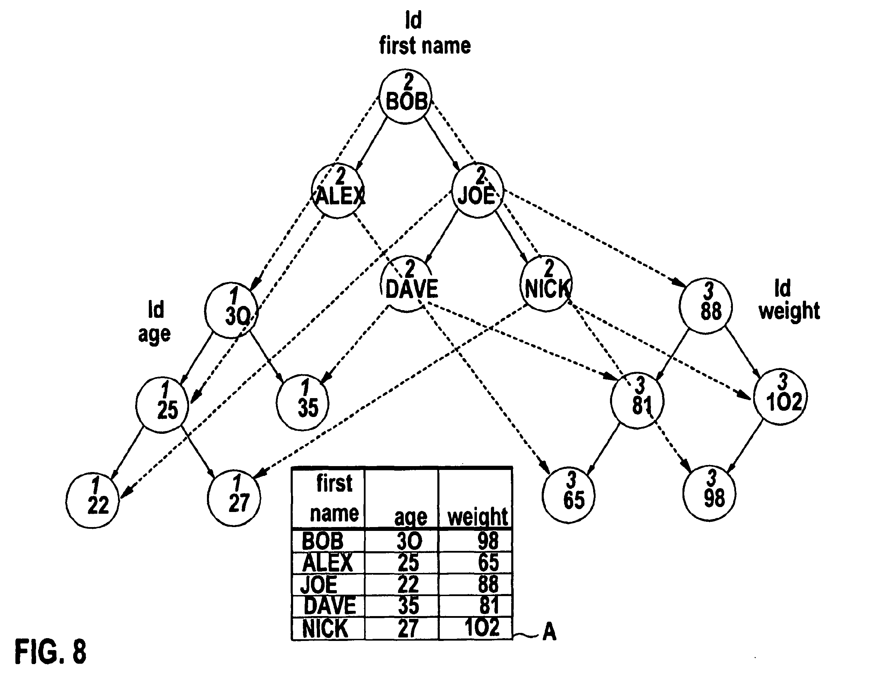

For the implementation of the levels below the InfoArea level, i.e. the InfoCluster, the InfoCourse, the InfoType, and the InfoCell levels, use is made of a data element according to the invention as shown in FIG. 3. In this example, the data element is shown schematically as an anchor, and is provided with a number of pointers. The pointers of the first pair are labelled LVR and RVR (Left Vertical Ring, respectively Right Vertical Ring), the pointers of the second pair are labelled LHR and RHR (Left Horizontal Ring, respectively Right Horizontal Ring), the pointers of the third pair are labelled LSR and RSR (Left Self Ring, respectively Right Self Ring), and the single pointer is labelled IF (InFormation bridge). Note that the pointers LSR, RSR and IF are in principle optional. This initial state is also the simplest of possible ring structures. Every pointer in the structure has a valid address, and cases of a non defined pointer (nil pointer) are avoided.
In the following, example data is used as shown in table A of FIG. 8. The table includes data regarding first names, ages and weights. For this table an InfoCluster is generated. Furthermore, three InfoTypes are generated to represent respectively first names, ages, and weights.

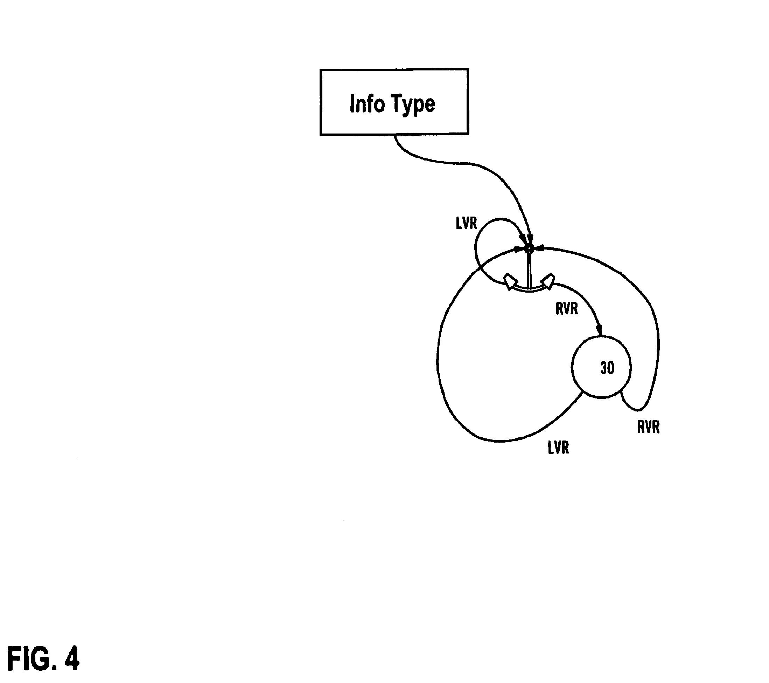

FIG. 4 illustrates the use of the data element for the implementation of the InfoType. In the InfoType, semantic information is included, such as, the data type (in this example "INTEGER"), field name (in this example "age")), etc. The InfoType has an anchor associated with the InfoType. The anchor points with its RVR pointer to the actual information carrier, that is the InfoCell. The InfoCell is as described above the lowest level entity within the data system. The InfoCell holds the information, as shown in FIG. 4; in this example "age is 30 in INTEGER".

As described above, the InfoCell is provided with a LVR/RVR pointer pair. As shown in FIG. 8, the RVR pointer of the InfoCell points towards the anchor, and also the LVR pointer points to the anchor. As a result, the ring configuration of the anchor is maintained.

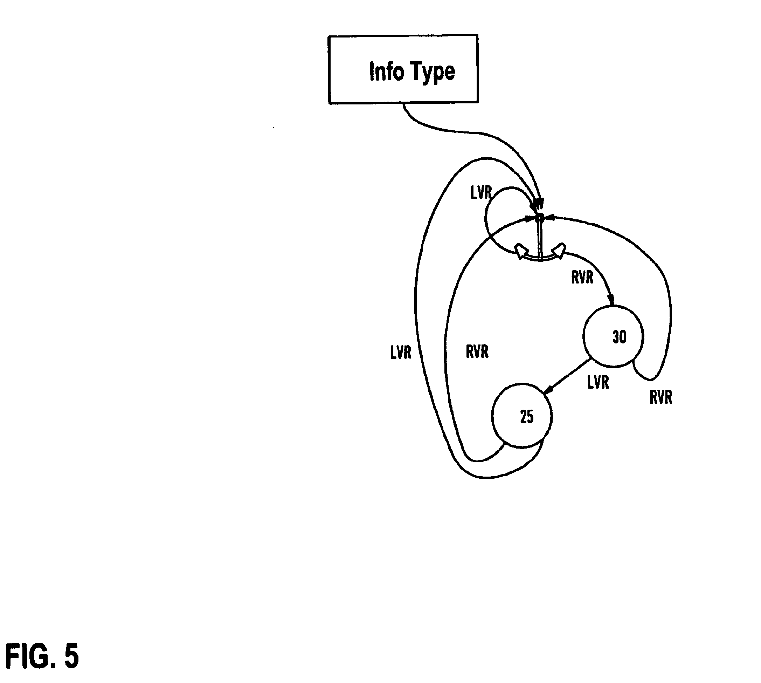

FIG. 5 illustrates how a further InfoCell is added to the data structure. The InfoCell (with the value "25") is inserted in the LVR ring after the first InfoCell. The LVR and RVR pointers of the InfoCell point to the anchor, as to maintain a closed ring.

The order in which the InfoCells are organized depends on their value. In case of a smaller value, the InfoCell is ordered in on the LVR side, otherwise on the RVR side. This practise is well known in the art as binary tree building. Preferably, the binary trees are organized as balanced or AVL trees, methods which are well known in the art. These kinds of trees minimise the number of levels within the tree structure, so as to minimize access time. Preferably, all tree structures within the data system are dynamically balanced in use, so as to guarantee optimum access times.

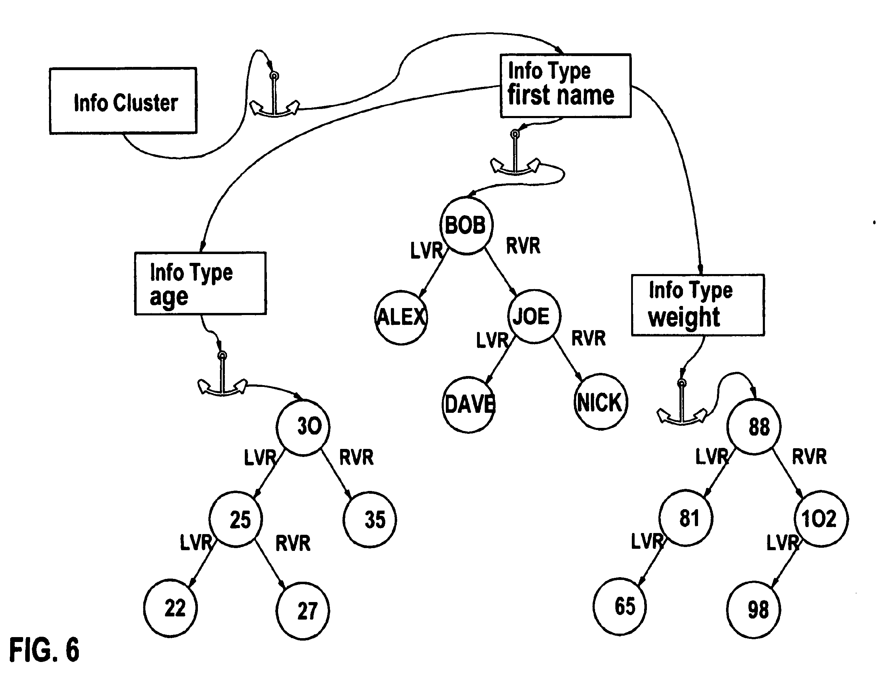

FIG. 6 illustrates the structure that is obtained when all InfoTypes of the table A are put into the data structure. In total, three InfoTypes are present; age, first name, and weight. Note that the end pointers of each last element in the respective trees are not shown. Under each anchor of the InfoType, the InfoCells are organised in a binary tree. The InfoCluster points to an anchor which in turn points to a first InfoType. The first InfoType in turn points to the other two InfoTypes. Each InfoType points to an anchor. The anchor has the additional function of a marker, that can be used by an access or query process as a break or return sign.

To complete the implementation of the table, the relations between the InfoType have to be made. To this end an InfoCourse is introduced.

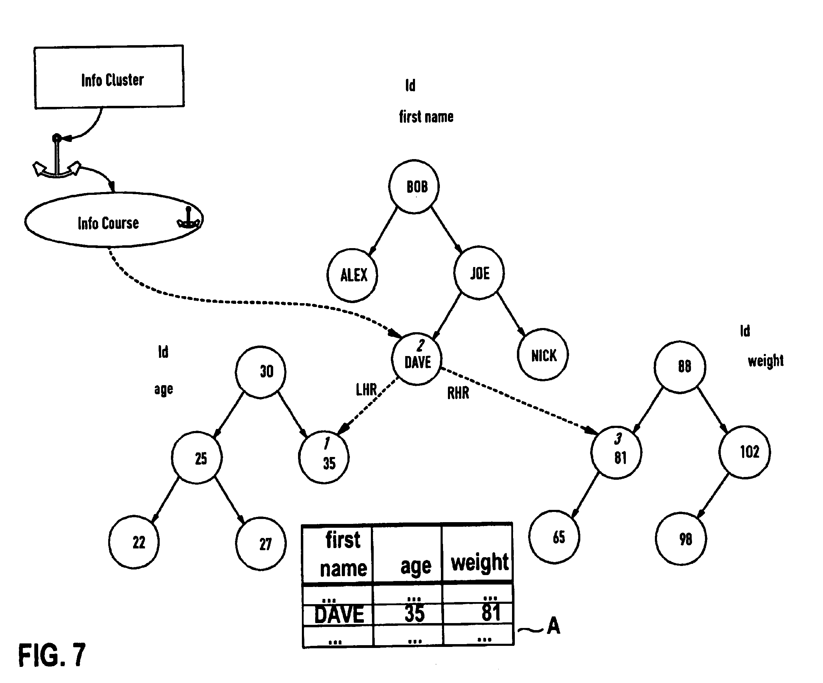

FIG. 7 shows the InfoCourse that contains the data for a row of the table A. Use is made of the LHR and RHR pointers. The end pointers again point back to the anchor of the InfoCourse to maintain the ring structure. Note that the InfoCourse also forms a binary tree, sorted by the ID numbers of the InfoTypes. Note that the ID numbers of the InfoTypes are unique. For example, integer values are used for the ID numbers.
FIG. 8 illustrates all the InfoCourse paths (for example implemented using pointers) for the table A. Note that all InfoCells have been provided in the top section with their respective InfoType Id number, over which the binary tree configuration of the InfoCourse via the LHR/RHR pointers is organized. Elements that belong to an InfoType are connected by solid arrows. Elements that belong to an InfoCourse are connected by dashed arrows.

For example, when five million records with 100 attributes (e.g., 100 columns of a relational database table) are loaded into the data storage system 902, then five million InfoCourse trees (InfoCourses) exist, one for each record. Each InfoCourse includes 100 nodes. Each InfoCourse has a corresponding InfoCourse anchor pointing to the respective InfoCourse. In other words, when loading five million records into the data storage system 902 then also five million InfoCourse anchors exist.

The data storage system 902, as described so far, allows one to quickly identify InfoCourses according to one or more conditions specified in a Boolean expression. In other words, any required subset of records can be provided by the data storage system with short response times. Further, the data storage system can perform simple counting tasks and answer questions, for example, about the number of InfoCourses (records) in a corresponding subset.

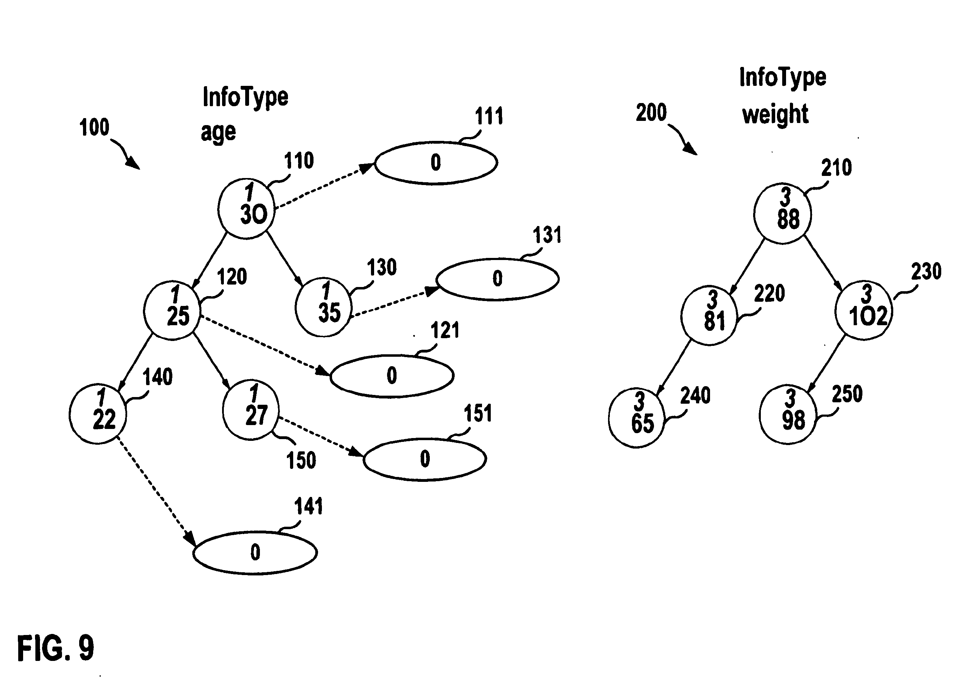

FIG. 9 explains how the data storage system 902 functionality can be extended to perform calculations for answering more complex questions with respect to numerical values associated with subsets of InfoCourses.

In the example of FIG. 8, the InfoType trees "Age" and "Weight" represent numerical attributes of InfoCourses relating to specific persons. In FIG. 9, these InfoType trees are referred to as InfoType trees 100, 200, respectively. An example of a complex question posed by a user to the data storage system through a corresponding query can be:
What is the average weight of persons having an age greater than or equal "20" and less than "30" vs. persons having an age greater than or equal "30" and less than "40". The first subset of InfoCourses includes the InfoCourses for "ALEX", "JOE", and "NICK", whereas the second subset includes the InfoCourses for "BOB" and "DAVE".

In the following it is described, how the data storage system can provide the answer to this kind of questions with very short response times.

For convenience of explanation, only the InfoType trees 100, 200 "weight" and "age" are shown in FIG. 9 with their nodes 110, 120, 130, 140, 150, and 210, 220, 230, 240, 250, respectively.

The data storage system creates a calculation object for each node of the InfoType tree that is used for defining the subsets. In the example, the "age" tree 110 is used to define the subsets of the InfoCourses according to age intervals.

For example, each node 110, 120, 130, 140, 150 of the subset defining InfoType tree 100 can have an additional pointer (illustrated by dashed arrows) pointing at the corresponding calculation object 111, 121, 131, 141, 151. The association of calculation objects with their corresponding InfoType tree node can also be implemented otherwise, for example, by using relationship tables or any other data structure suitable to describe relationships between objects.

For example, the calculation objects 111, 121, 131, 141, 151 can be instantiated when starting the data storage system. Alternatively, they can be instantiated at demand when a corresponding query is received by the data storage system for the first time. Once they are instantiated, they may be kept in corresponding data structures in the main memory of the data storage system. For example, they can be handled by a memory manager of the data storage system to ensure that they can be used instantaneously to evaluate each further query that requires calculations according to the invention. After instantiation, each calculation object is initialised (e.g., with value "0").

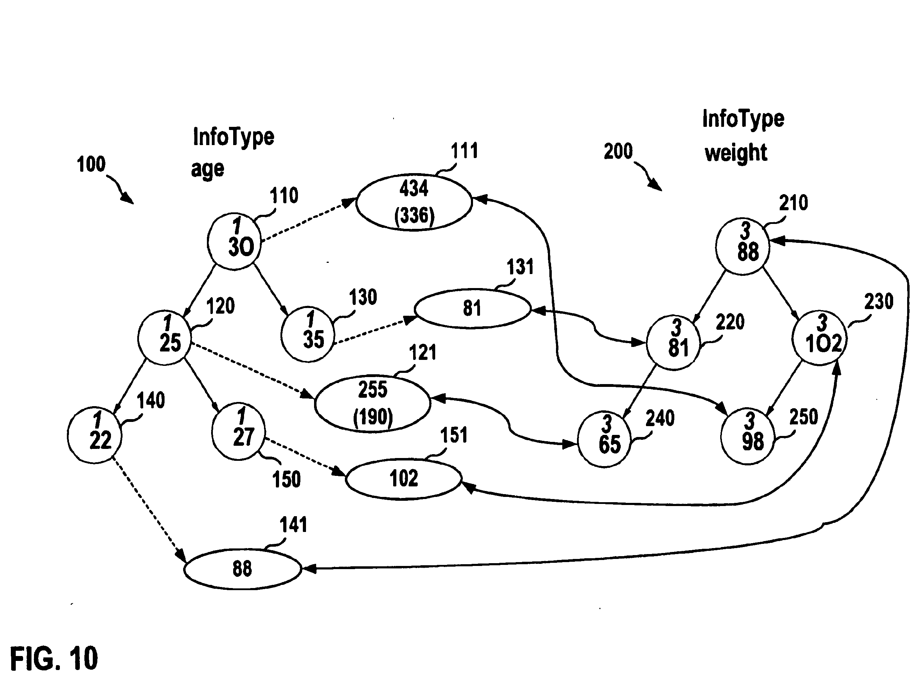

In FIG. 10, the double arrows indicate pairs of nodes, such as the pair (node 110, node 250), of the InfoType trees 100 and 200 that belong to the same InfoCourse. For convenience of illustration, the double arrows are drawn between the calculation objects of the "age" InfoType tree 100 nodes to the corresponding nodes of the "weight" InfoType tree 200. The "weight" nodes represent numerical attribute values that are subject to aggregation.

To calculate the values of the calculation objects for satisfying the query request for aggregate information, the subset defining InfoType tree 100 is traversed, for example, bottom up as described in the following. Those skilled in the art may also use a different traversing order.

In general, each InfoType node 110, 120, 130, 140, 150 of the "age" InfoType tree 100 uses the corresponding calculation object 111, 121, 131, 141, 151 for adding the value of the associated numerical attribute 250, 240, 220, 210, 230 to the sum of the calculation objects of its child nodes. In case, a "age" InfoType node is a leaf of the "age" InfoType tree 100 that has no child nodes, the sum of the calculation objects of its child nodes is considered to be zero. That is, a leaf node simply copies the value of its associated numerical attribute into its calculation object.

For example, the traversing starts with node 140. The corresponding node in the "weight" InfoType tree 200 with respect to the InfoCourse for "JOE" is node 210. The value "88" of the node 210 is now added to the initial value of the corresponding calculation object 141. Similarly, the calculation object 151 of the next node 150 relating to the InfoCourse for "NICK" receives the value "102" from the corresponding node 230.

The sum of both calculation object values ("88" + "102" = "190") is written to the calculation object 121 of the parent node 120. Then the corresponding weight value "65" of node 240 in the InfoCourse for "ALEX" is added to the current value of the calculation object 121 ("190" + "65" = "255"). In the drawing, the intermediate value "190" is put in parenthesis to illustrate its intermediate nature.

The above described traversing steps are repeated for the "age" nodes 130 and 110 resulting in final values "81" and "434" for the corresponding calculation objects 131 and 111, respectively. Finally, the calculation object of each "age" node contains the sum of all calculation objects of the subordinate tree structure and of its own "weight" value of the corresponding node in the "weight" InfoType tree 210.

The "age" InfoType tree 100 is now prepared for aggregation of numerical information with respect to subsets of InfoCourses. The time that is necessary for the preparation that includes the instantiation, initialisation, and calculation for the calculation objects depends on the used hardware platform of the data storage system. With current hardware platform technology, the preparation time can be, for example, in the range of 1 to 3 seconds. That is, only the first user requesting the aggregate information has to wait for the preparation time while the data storage system is preparing the corresponding tree structure(s). The next user having a similar request targeting the same InfoTypes immediately benefits form the already prepared tree structure(s) and receives an instantaneous response.

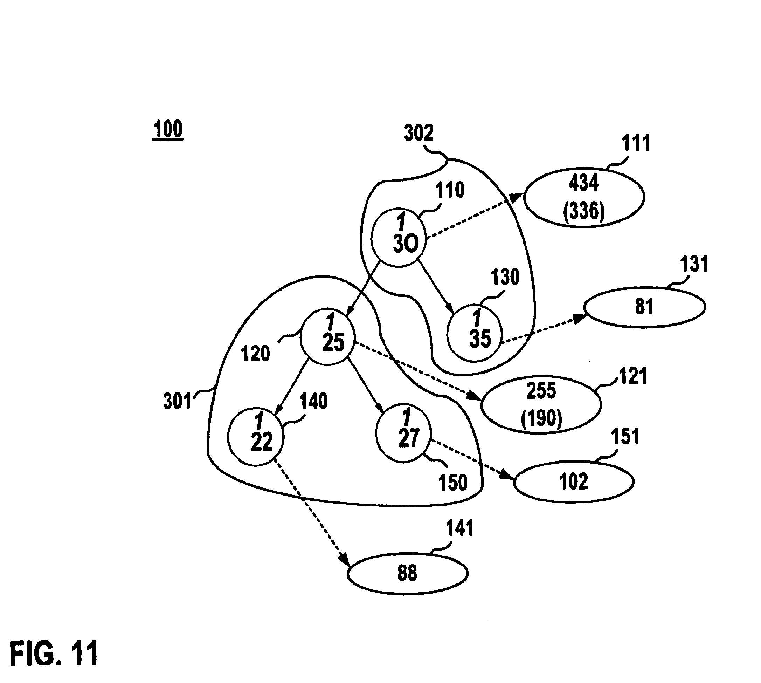

FIG. 11 illustrates, how the data storage system aggregates numerical information according to one embodiment of the invention. The first subset 301 and the second subset 302, as defined in the description of FIG. 9, include the nodes 120, 140, 150, and 110, 130, respectively.

To calculate the average weight for each subset, in a first step, a calculator of the data storage system determines the total sum of the numerical attribute "weights" for each subset 301, 302. In a second step, the total sum is divided by the number of nodes in the corresponding subset.

The first subset 301 has the root node 120. All subordinate nodes 140, 150 also belong to the fist subset 301. Therefore, the total weights sum for the first subset 301 is immediately known from the value of the calculation object 121 associated with the root node 120. The value is "255".

The number of nodes in the first subset can be derived immediately from a corresponding counter of the root node as described in the patent application PCT/EP02/01026. By dividing the total weights "255" sum by the number of nodes "3" in the first subset 301, the average weight "85" per person is calculated for the first subset (255 / 3 = 85).

The second subset 302 has the root node 110 and the subordinate node 130. However, the calculation object 111 that is associated with the root node 110 also includes the weights of the first subset 301. Therefore, the calculator can calculate the total weights sum for the second subset 302 by subtracting the value "255" of the calculation object 121 for the first subset 301 from the total value "434" in the calculation object "111", which is immediately known from the value of the calculation object 121 associated with the node 110. The difference 434 - 255 = 179 is divided by the number of nodes "2" in the second subset 302 resulting in an average weight "89,5" for the second subset 302.

In general, the calculator reads the calculation object value of the root node of an identified subset. From this calculation object value the calculator subtracts the values of calculation objects of subordinate nodes of the subset root node, whereby these subordinate nodes are root nodes of sub-trees of the InfoType tree that are not in the value range of the identified subset.

The advantage is that even for a large number of nodes in a subset of matching InfoCourses only a few simple additions and subtractions need to be calculated. This is typically performed in the range of nanoseconds on a current hardware platform.

The above example explains in detail how to calculate average values for specific subsets of InfoCourses with respect to a numerical InfoType. The described mechanism of aggregating numerical information by using calculation objects that are attached to the InfoType nodes of the subset defining InfoType tree other aggregation functions may be performed as well. For example, an intermediate step of the average calculation is the determination of the sum of calculation object values that belong to a subset.

Attaching a further calculation object for a further numerical InfoType allows the data storage system to perform further calculations on the aggregate numerical information. For example, the subset defining InfoType tree relates to products of an enterprise. Subsets can be defined that correspond to product groups. A first calculation object may be attached to each product node for aggregating revenues. A second calculation object may be attached to each product node for aggregating cost. In this case, the profit for each product group can easily be determined by subtracting the cost from the revenue at the aggregate level after the above described mechanism has been applied to both calculation objects for each product node.
Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A data storage system (902) for aggregating numerical information using a data structure,
the data storage system (902) having data structure elements, comprising
- InfoSystem corresponding to a management system in a relational database,
- InfoArea corresponding to a database in the relational database,
- a plurality of InfoCluster each corresponding to a table in the relational database,
- InfoType corresponding to an attribute in the relational database,
- a plurality of InfoCourses each corresponding to a data record in the relational database and including a plurality of InfoCourse nodes organized in a tree structure, and
- InfoCell corresponding to a field in the relational database,
wherein in a static hierarchy structure of the data storage system (902), the highest level is the InfoSystem level, down from the top level, one or more InfoAreas are connected to the InfoSystem through a linking element, each InfoArea being connected via a further linking element to an Infocluster, and each InfoCluster being connected to at least one InfoCourse and at least one InfoType through respective linking elements, the lowest level in the hierarchical structure being InfoCell:
wherein an InfoType tree (100) is provided, where each InfoType node (110, 120, 130, 140, 150) corresponds to an InfoCourse node and represents an attribute value of the corresponding InfoCourse; each InfoType node (110, 120, 130, 140, 150) being associated with a numerical attribute (250, 240, 220, 210, 230) related to the corresponding InfoCourse;
**characterized in that**
each InfoType node (110, 120, 130, 140, 150) has a corresponding calculation object (111, 121, 131, 141, 151) which is adapted, in case the InfoType node has child nodes, to add the value of the associated numerical attribute (250, 240, 220, 210, 230) to the sum of the calculation objects of its child nodes to obtain a calcution object value, where each InfoType node (110, 120, 130, 140, 150) has a pointer to its corresponding calculation object (111, 121, 131, 141, 151), and
where a subset (301, 302) of InfoCourses complies with a portion of a Boolean expression (500), the portion including a condition that refers to node values of the InfoType tree (100),
the data storage system further comprising a calculator for determining the aggregate value of the numerical attributes associated with the subset (301, 302), where the calculator reads the calculation object value (121, 111) of the root node (120, 110) of the identified subset (301, 302), and subtracts from the subset root node calculation object value (111) the calculation object values (121) of the nodes of the InfoType tree corresponding to the nodes of the InfoCourse (120) that are subordinate to the subset root node (110) and that are root nodes of sub-trees of the InfoType tree (100) not being in a value range of the identified subset (302).

2. Data storage system according to claim 1, where the numerical attributes (250, 240, 220, 210, 230) are InfoType nodes of a further InfoType tree (200).

3. A computer implemented method using a data storage system for aggregating numerical information using a data structure, the data storage system (902) having data structure elements, comprising
- InfoSystem corresponding to a management system in a relational database,
- InfoArea corresponding to a database in the relational database,
- a plurality of InfoCluster each corresponding to a table in the relational database,
- InfoType corresponding to an attribute in the relational database,
- a plurality of InfoCourses each corresponding to a data record in the relational database and including a plurality of InfoCourse nodes organized in a tree structure, and
- InfoCell corresponding to a field in the relational database,
wherein in a static hierarchy structure of the data storage system (902), the highest level is the InfoSystem level, down from the top level, one or more InfoAreas are connected to the InfoSystem through a linking element, each InfoArea being connected via a further linking element to an infocluster, and each InfoCluster being connected to at least one InfoCourse and at least one InfoType through respective linking elements, the lowest level in the hierarchical structure being InfoCell that stores:
a plurality of InfoCourses, where each InfoCourse represents a data record and includes a plurality of InfoCourse nodes organized in a tree structure;
an InfoType tree (100), where each InfoType node (110, 120, 130, 140, 150) corresponds to an InfoCourse node and represents an attribute value of the corresponding InfoCourse; each InfoType node (110, 120, 130, 140, 150) being associated with a numerical attribute (250, 240, 220, 210, 230) related to the corresponding InfoCourse;
comprising the steps of:
instantiating a calculation object (111, 121, 131, 141, 151) for each InfoType node (110, 120, 130, 140, 150);
for each InfoType node (110, 120, 130, 140, 150), adding the value of the associated numerical attribute to its corresponding calculation object and, in case the InfoType node has child nodes, further adding the calculation object values of the child nodes to its corresponding calculation object to obtain a calculation object value,
where each InfoType node (110, 120, 130, 140, 150) is pointing to its corresponding calculation object (111, 121, 131, 141, 151), the method further comprising the steps of:
identifying a subset (301, 302) of InfoCourses that comply with a portion of a Boolean expression (500), the portion including a condition that refers to node values of the InfoType tree (100),
determining the aggregate value of the numerical attributes associated with the identified subset (301, 302;
reading the calculation object value (121, 111) of the root node (120, 110) of the identified subset (301, 302); and
subtracting from the subset root node calculation object value (111) the values of calculation objects (121) of the nodes of the InfoType tree corresponding to the nodes of the Info course that are subordinate nodes (120) of the subset root node (110), whereby the subordinate nodes are root nodes of sub-trees of the InfoType tree (100) that are not in the value range of the identified subset (302).

4. Method according to claim 3, where the numerical attributes (250, 240, 220, 210, 230) are InfoType nodes of a further InfoType tree (200).

5. A computer program product for aggregating numerical information in a computer system comprising a plurality of instructions that when loaded into a memory of the computer system cause at least one processor of the computer system to execute the steps of any one of the claims 3 to 4.

6. A computer system (990) for aggregating numerical information comprising a first computing device (901) and a second computing device (902):
the second computing device (902) being operable according to any one of the claims 1 to 2; and
the first computing device (901) for composing the Boolean expression (500) and sending the Boolean expression (500) to the second computing device (902).

## Patentansprüche

1. Datenspeichersystem (902) zum Zusammenfassen von numerischer Information unter Verwendung einer Datenstruktur, wobei
das Datenspeichersystem (902) Datenstrukturelemente aufweist, die Folgendes umfassen
- *InfoSystem,* das einem Managementsystem in einer relationalen Datenbank entspricht,
- *InfoArea,* die einer Datenbank in der relationalen Datenbank entspricht,
- Eine Vielzahl an *InfoCluster,* von denen jeder einer Tabelle in der relationalen Datenbank entspricht,
- *InfoType,* der einem Attribut in der relationalen Datenbank entspricht,
- eine Vielzahl an *InfoCourses,* von denen jeder einem Datensatz in der relationalen Datenbank entspricht und der eine Vielzahl von *InfoCourse*-Knoten umfasst, die in einer Baumstruktur organisiert sind, und
- *InfoCell,* die einem Feld in der relationalen Datenbank entspricht, wobei in einer statischen hierarchischen Struktur des Datenspeichersystems (902) die höchste Ebene die *InfoSystem*-Ebene ist, von der höchsten Ebene herab, sind eine oder mehrere *InfoAreas* mit dem *InfoSystem* durch ein verbindendes Element verbunden, wobei jede *InfoArea* mit einem *InfoCluster* durch ein weiteres verbindendes Element verbunden ist, und wobei jeder *InfoCluster* mit mindestens einem *InfoCourse* und mindestens ein *InfoType* mittels jeweiliger verbindender Elemente verbunden ist, wobei die unterste Ebene in der hierarchischen Struktur die *InfoCell* ist:
wobei ein *InfoType*-Baum (100) bereitgestellt wird, bei dem jeder *InfoType-*Knoten (110, 120, 130, 140, 150) einem *InfoCourse*-Knoten entspricht und einen Attributwert des entsprechenden InfoCourse darstellt; wobei jeder *InfoType*-Knoten (110, 120, 130, 140, 150) einem numerischen Attribut (250, 240, 220, 210, 230) zugeordnet ist, das auf den entsprechenden *InfoCourse* bezogen ist;
**dadurch gekennzeichnet, dass**
jeder *InfoType*-Knoten (110, 120, 130, 140, 150) ein entsprechendes Berechnungsobjekt (111, 121, 131, 141, 151) aufweist, das, falls der *InfoType-*Knoten Kindknoten aufweist, dazu geeignet ist, den Wert des zugeordneten numerischen Attributs (250, 240, 220, 210, 230) zu der Summe des Berechnungsobjekts seiner Kindknoten zu addieren, um einen Wert des Berechnungsobjektes zu erhalten, wobei jeder *InfoType*-Knoten (110, 120, 130, 140, 150) einen Zeiger *(pointer)* aufweist, der auf sein entsprechendes Berechnungsobjekt (111, 121, 131, 141, 151) weist, und
wobei eine Teilmenge (301, 302) der *InfoCourses* einem Teil eines Booleschen Ausdrucks (500) genügt, wobei der Teil eine Bedingung umfasst, die sich auf Knotenwerte des *InfoType*-Baums (100) bezieht,
wobei das Datenspeichersystem des Weiteren einen Rechner umfasst zur Bestimmung des Gesamtwertes (*aggregate value*) der numerischen Attribute, die der Teilmenge (301, 302) zugeordnet sind, wobei der Rechner den Wert (121, 111) des Berechnungsobjektes des Stammknotens (120, 110) der identifizierten Teilmenge (301, 302) liest und vom Wert (111) des Berechnungsobjektes des Teilmengen-Stammknotens die Berechnungswerte (121) der Knoten (120) des *InfoType*-Baums abzieht die den Knoten des *InfoCourse* entsprechen, die dem Teilmengen-Stammknoten (110) untergeordnet sind, und die Stammknoten der Unterbäume des *InfoType*-Baums (100) sind, die nicht im Wertebereich der identifizierten Teilmenge (302) liegen.

2. Datenspeichersystem nach Anspruch 1, wobei die numerischen Attribute (250, 240, 220, 210, 230) *InfoType*-Knoten eines weiteren *InfoType*-Baums (200) sind.

3. Computerimplementiertes Verfahren, das ein Datenspeichersystem verwendet zum Zusammenfassen von numerischer Information unter Verwendung einer Datenstruktur, wobei das Datenspeichersystem (902) Datenstrukturelemente aufweist, die Folgendes umfassen
- *InfoSystem,* das einem Managementsystem in einer relationalen Datenbank entspricht,
- *InfoArea,* die einer Datenbank in der relationalen Datenbank entspricht,
- Eine Vielzahl an *InfoCluster,* von denen jeder einer Tabelle in der relationalen Datenbank entspricht,
- *InfoType,* der einem Attribut in der relationalen Datenbank entspricht,
- eine Vielzahl an *InfoCourses,* von denen jeder einem Datensatz in der relationalen Datenbank entspricht und der eine Vielzahl von *InfoCourse*-Knoten umfasst, die in einer Baumstruktur organisiert sind, und
- *InfoCell,* die einem Feld in der relationalen Datenbank entspricht, wobei in einer statischen hierarchischen Struktur des Datenspeichersystems (902) die höchste Ebene die *InfoSystem*-Ebene ist, von der höchsten Ebene herab, sind eine oder mehrere *InfoAreas* mit dem *InfoSystem* durch ein verbindendes Element verbunden, wobei jede *InfoArea* mit einem *InfoCluster* durch ein weiteres verbindendes Element verbunden ist, und wobei jeder *InfoCluster* mit mindestens einem *InfoCourse* und mindestens ein *InfoType* mittels jeweiliger verbindender Elemente verbunden ist, wobei die unterste Ebene in der hierarchischen Struktur die *InfoCell* ist, die Folgendes speichert:
eine Vielzahl an *InfoCourses,* wobei jeder *InfoCourse* einen Datensatz darstellt und eine Vielzahl an *InfoCourse*-Knoten umfasst, die in einer Baumstruktur organisiert sind;
einen *InfoType*-Baum (100), wobei jeder InfoType-Knoten (110, 120, 130, 140, 150) einem *InfoCourse*-Knoten entspricht und einen Attributwert des entsprechenden *InfoCourse* darstellt; wobei jeder *InfoType*-Knoten (110, 120, 130, 140, 150) einem numerischen Attribut (250, 240, 220, 210, 230) zugeordnet ist, das auf den entsprechenden *InfoCourse* bezogen ist;
das folgende Verfahrensschritte umfasst:
Instanziieren eines Berechnungsobjektes (111, 121, 131, 141, 151) für jeden InfoType-Knoten (110, 120, 130, 140, 150);
Für jeden *InfoType*-Knoten (110, 120, 130, 140, 150), den Wert des zugeordneten numerischen Attributs zu seinem entsprechenden Berechnungsobjekt addieren, und, falls der *InfoType*-Knoten Kindknoten aufweist, des Weiteren die Werte des Berechnungsobjektes der Kindknoten zu seinem entsprechenden Berechnungsobjekt addieren, um einen Wert des Berechnungsobjektes zu erhalten,
wobei jeder *InfoType*-Knoten (110, 120, 130, 140, 150) auf sein entsprechendes Berechnungsobjekt (111, 121, 131, 141, 151) weist, wobei das Verfahren des Weiteren die folgenden Schritte umfasst:
Eine Teilmenge (301, 302) der *InfoCourses* identifizieren, die einem Teil eines Booleschen Ausdrucks (500) genügt, wobei der Teil eine Bedingung umfasst, die sich auf Knotenwerte des *InfoType-Baums* (100) bezieht,
den Gesamtwert der numerischen Attribute bestimmen, die der Teilmenge (301, 302) zugeordnet sind,
den Wert (121, 111) des Berechnungsobjektes des Stammknotens (120, 110) der identifizierten Teilmenge (301, 302) lesen; und
vom Wert (111) des Berechnungsobjektes des Teilmengen-Stammknotens die Werte der Berechnungsobjekte (121) der Knoten des *InfoType-Baums* abzieht, die den Knoten des *InfoCourse* entsprechen, die untergeordnete Knoten (120) des Teilmengen-Stammknotens (110) sind, wobei die untergeordneten Knoten Stammknoten der Unterbäume des *InfoType-Baums* (100) sind, die nicht im Wertebereich der identifizierten Teilmenge (302) liegen.

4. Verfahren nach Anspruch 3, wobei die numerischen Attribute (250, 240, 220, 210, 230) *InfoType*-Knoten eines weiteren *InfoType-Baums* (200) sind.

5. Computerprogrammprodukt zum Zusammenfassen von numerischer Information in einem Computersystem, das eine Vielzahl an Befehlen umfasst, die, wenn sie in einen Speicher des Computersystems geladen werden, mindestens einen Prozessor des Computersystems dazu veranlassen, die Schritte nach einem der Ansprüche 3 und 4 auszuführen.

6. Ein Computersystem (990) zum Zusammenfassen von numerischer Information, das eine erste Rechnereinrichtung (901) und eine zweite Rechnereinrichtung (902) umfasst:
wobei die zweite Rechnereinrichtung (902) nach einem der Ansprüche 1 bis 2 betreibbar ist; und
die erste Rechnereinrichtung (901) zum Abfassen des Booleschen Ausdrucks (500) und zum Senden des Booleschen Ausdrucks (500) an die zweite Rechnereinrichtung (902) betreibbar ist.

## Revendications

1. Un système de stockage de données (902) pour agréger des informations numériques en utilisant une structure de données,
le système de stockage de données (902) présentant des éléments de structure de données comprenant
- *InfoSystem* correspondant à un système de gestion dans une base de données relationnelle,
- *InfoArea* correspondant à une base de données dans la base de données relationnelle,
- une pluralité de *InfoCluster,* dont chacun correspond à un tableau dans la base de données relationnelle,
- *InfoType* correspondant à un attribut dans la base de données relationnelle,
- une pluralité de *InfoCourses,* dont chacun correspond à un registre de données dans la base de données relationnelle et comprend une pluralité de noeuds *InfoCourse* organisés dans une structure arborescente, et
- *InfoCell* correspondant à un champ dans la base de données relationnelle,
sachant que dans une structure hiérarchique statique du système de stockage de données (902), le plus haut niveau est le niveau *InfoSystem,* et, descendant du plus haut niveau, un ou plusieurs *InfoAreas* sont reliés au *InfoSystem* par un élément de chaînage, chaque *InfoArea* étant relié à un *InfoCluster* par un autre élément de chaînage, et chaque *InfoCluster* étant relié à au moins un *InfoCourse* et au moins à un *InfoType* par des respectifs éléments de chaînage, le niveau le plus bas dans la structure hiérarchique étant le *InfoCell* :
sachant qu'on prévoit un arbre *InfoType* (100), pour lequel chaque noeud *InfoType* (110, 120, 130, 140, 150) correspond à un noeud *InfoCourse* et représente une valeur d'attribut du correspondant *InfoCourse* ; chaque noeud *InfoType* (110, 120, 130, 140, 150) étant associé à un attribut numérique (250, 240, 220, 210, 230) lié au correspondant *InfoCourse* ;
**caractérisé en ce que**
chaque noeud *InfoType* (110, 120, 130, 140, 150) présente un objet de calcul (111, 121, 131, 141, 151) qui est approprié, au cas où le noeud *InfoType* présente des noeuds enfants, pour ajouter la valeur de l'attribut numérique associé (250, 240, 220, 210, 230) à la somme des objets de calcul de ses noeuds enfants pour obtenir une valeur d'objet de calcul, sachant que chaque noeud *InfoType* (110, 120, 130, 140, 150) présente un pointeur visant sur son objet de calcul (111, 121, 131, 141, 151) correspondant, et
sachant qu'un sous-ensemble (301, 302) des *InfoCourses* se conforme à une portion d'une expression booléenne (500), la portion comprenant une condition portant sur des valeurs de noeud de l'arbre *InfoType* (100),
le système de stockage de données comprenant en outre un calculateur pour déterminer la valeur agrégée des attributs numériques associés au sous-ensemble (301, 302), sachant que le calculateur lit la valeur de l'objet de calcul (121, 111) du noeud racine (120, 110) du sous-ensemble identifié (301, 302), et soustrait de la valeur (111) d'objet de calcul du noeud racine du sous-ensemble les valeurs d'objet de calcul (121) des noeuds de l'arbre *InfoType* (120) correspondant aux noeuds *InfoCourse,* qui sont subordonnés au noeud racine (110) du sous-ensemble, et c'est-à-dire qu'ils agit des noeuds racine d'arbres secondaires (*sub-trees*) de l'arbre *InfoType* (100) qui ne se trouvent pas dans une fourchette de valeurs du sous-ensemble identifié (302).

2. Système de stockage de données d'après la revendication 1, pour lequel les attributs numériques (250, 240, 220, 210, 230) sont des noeuds *InfoType* d'un arbre *InfoType* (200) supplémentaire.

3. Procédé mis en oeuvre par un ordinateur utilisant un système de stockage de données pour agréger des informations numériques en utilisant une structure de données, le système de stockage de données (902) présentant des éléments de structure de données comprenant
- *InfoSystem* correspondant à un système de gestion dans une base de données relationnelle,
- *InfoArea* correspondant à une base de données dans la base de données relationnelle,
- une pluralité de *InfoCluster,* dont chacun correspond à un tableau dans la base de données relationnelle,
- *InfoType* correspondant à un attribut dans la base de données relationnelle,
- une pluralité de *InfoCourses,* dont chacun correspond à un registre de données dans la base de données relationnelle et comprend une pluralité de noeuds *InfoCourse* organisés dans une structure arborescente, et
- *InfoCell* correspondant à un champ dans la base de données relationnelle,
sachant que dans une structure hiérarchique statique du système de stockage de données (902), le plus haut niveau est le niveau *InfoSystem,* et, descendant du plus haut niveau, un ou plusieurs *InfoAreas* sont reliés au *InfoSystem* par un élément de chaînage, chaque *InfoArea* étant relié à un *InfoCluster* par un autre élément de chaînage, et chaque *InfoCluster* étant relié à au moins un *InfoCourse* et au moins à un *InfoType* par des respectifs éléments de chaînage, le niveau le plus bas dans la structure hiérarchique étant le *InfoCell*, qui stocke :
une pluralité de *InfoCourses,* où chaque *InfoCourse* représente un registre de données et comprend une pluralité de noeuds *InfoCourse* organisés dans une structure arborescente ;
un arbre *InfoType* (100), où chaque noeud *InfoType* (110, 120, 130, 140, 150) correspond à un noeud *InfoCourse* et représente une valeur d'attribut du correspondant *InfoCourse ;* chaque noeud *InfoType* (110, 120, 130, 140, 150) étant associé à une valeur numérique (250, 240, 220, 210, 230) lié au correspondant *InfoCourse ;*
comprenant les étapes suivantes :
instancier un objet de calcul (111, 121, 131, 141, 151) pour chaque noeud *InfoType* (110, 120, 130, 140, 150) ;
pour chaque noeud *InfoType* (110, 120, 130, 140, 150) ajouter la valeur de l'attribut numérique associé a son objet de calcul correspondant et, au cas où le noeud *InfoType* présente des noeuds enfants, ajouter en outre les valeurs d'objet de calcul des noeuds enfants à son objet de calcul correspondant pour obtenir une valeur d'objet de calcul,
sachant que chaque noeud *InfoType* (110, 120, 130, 140, 150) vise sur son objet de calcul (111, 121, 131, 141, 151) correspondant, le procédé comprenant en outre les étapes suivantes :
identifier un sous-ensemble (301, 302) de *InfoCourses,* qui se conforme à une portion d'une expression booléenne (500), la portion comprenant une condition portant sur des valeurs de noeud de l'arbre *InfoType* (100),
déterminer la valeur agrégée des attributs numériques associés au sous-ensemble identifié (301, 302),
lire la valeur de l'objet de calcul (121, 111) du noeud racine (120, 110) du sous-ensemble identifié (301, 302), et
soustraire de la valeur (111) d'objet de calcul du noeud racine du sous-ensemble les valeurs d'objet de calcul (121) des noeuds de l'arbre *InfoType* correspondant aux noeuds *InfoCourse,* qui sont des noeuds subordonnés (120) au noeud racine (110) du sous-ensemble, sachant que les noeuds subordonnés sont des noeuds racine d'arbres secondaires de l'arbre *InfoType* (100) qui ne se trouvent pas dans une fourchette de valeurs du sous-ensemble identifié (302).

4. Procédé d'après la revendication 3, pour lequel les attributs numériques (250, 240, 220, 210, 230) sont des noeuds *InfoType* d'un arbre *InfoType* (200) supplémentaire.

5. Programme d'ordinateur en tant que produit prévu pour agréger des informations numériques dans un système informatique comprenant une pluralité d'instructions, lesquelles, quand elles sont chargées dans la mémoire du système informatique, conduisent au moins un processeur du système informatique à exécuter les étapes d'après une des revendications de 3 à 4.

6. Un système informatique (990) prévu pour agréger des informations numériques comprenant un premier dispositif informatique (901) et un deuxième dispositif informatique (902) :
le deuxième dispositif informatique (902) étant utilisable d'après une des revendications de 1 à 2 ; et
premier dispositif informatique (901) pour composer l'expression booléenne (500) et envoyer l'expression booléenne (500) au deuxième dispositif informatique (902).
